# EUROPEAN PATENT APPLICATION

(11) **EP 4 786 277 A1**
(43) Date of publication of application: **05.08.2026**
(21) Application number: 25217730.8
(22) Date of filing: 21.11.2025
(51) Int. Cl.: B60Q 3/225, B60Q 3/44, B60Q 3/80, B60Q 3/51

(54) **A LIGHTING SYSTEM OF A VEHICLE AND A METHOD THEREOF**

(30) Priority: 29.01.2025 IN 202541007640
(71) Applicant: TVS Motor Company Limited, 600006 Chennai (IN)
(72) Inventor: Shanmugam, Yuvaraj, 600006 Chennai (IN); Manikandan, Priya, 600006 Chennai (IN); Soundarrajan, Vignesh, 600006 Chennai (IN); Suresh, Thatavarthi Prakasam, 600006 Chennai (IN)
(74) Representative: Patentanwaltskanzlei Matschnig & Forsthuber OG

(57) **Abstract**

The present disclosure relates to a lighting system (200) of a vehicle (100) and a method for controlling the lighting system (200). The lighting system (200) comprises one or more light emitting devices (101) installed at one or more predefined portions (103A, 103B) of the vehicle (103A, 103B), one or more actuators (201) to change an orientation of the one or more light emitting devices (101), one or more sensors (203) to detect at least one or more user gestures, and a control unit (205) to control the orientation of the one or more light emitting devices (101) using the one or more actuators (201) and based on detection of the one or more user gestures by the one or more sensors (203).

## Description

### TECHNICAL FIELD

The present disclosure relates to a lighting system of a vehicle. More particularly but not exclusively, the present disclosure relates to a lighting system of a vehicle and a method for controlling the lighting system.

### BACKGROUND

Traditional vehicle controls such as buttons, switches, and touchscreen systems, often require drivers to divert their attention from the road in order to operate them. This distraction increases the likelihood of accidents and diminishes overall road safety. The traditional vehicle controls necessitate both visual and physical engagement, making it more difficult for the driver to maintain their focus on the primary task of driving. As a result, there is a growing need for vehicle systems that enable drivers to control various functions without requiring them to take their eyes off the road or their hands off the steering wheel. Traditionally, for lighting systems, the drivers or other users have been required to manually locate and press a button to turn on or adjust cabin lights, a process that could distract from driving.

Additionally, many vehicles include separate lighting systems for the driver and passenger cabins, each requiring individual components such as wiring, switches, and fixtures. This redundancy leads to inefficiencies, including increased weight, higher part counts, higher complexity in circuitry and greater energy consumption. From a manufacturing perspective, the inclusion of multiple, independent lights can add complexity and drive up both production and maintenance costs. Furthermore, when these lights operate independently, it can result in unnecessary energy consumption, which negatively affects the vehicle's overall energy efficiency.

As environmental sustainability becomes an increasingly important consideration in the automotive industry, vehicle manufacturers are striving to optimize the layouts for their vehicles. There is a growing push to reduce the number of components and integrate energy-efficient technologies that streamline the vehicle's architecture.

In the pursuit of more sustainable automotive solutions, there is a strong focus on power consumption optimization, particularly in electric vehicles (EVs), where every bit of energy savings contributes to greater efficiency and longer battery life. Further, the growing demand for improved customer comfort and convenience further emphasizes the need for advanced, intuitive vehicle features. Gesture-controlled lighting systems, along with other optimized features like motion sensors, automatic dimming, and adaptive lighting based on ambient conditions, offer a more adaptable and pleasant cabin environment. These improvements not only elevate the driving experience but also contribute to enhanced safety by minimizing distractions and ensuring the driver can remain focused on the road.

The present disclosure addresses these challenges by providing a lighting system of a vehicle and a method for controlling the lighting system.

### SUMMARY OF THE INVENTION

The following summary is illustrative only and is not intended to be in any way limiting. In addition to the illustrative aspects, embodiments, and features described below, further aspects, embodiments, and features will become apparent by reference to the drawings and the following detailed description.

The present disclosure relates to a lighting system of a vehicle. The lighting system comprises one or more light emitting devices, one or more actuators, one or more sensors, and a control unit. The one or more light emitting devices are installed at one or more predefined portions of the vehicle. The one or more actuators are configured to change the orientation of the one or more light emitting devices. The one or more sensors are configured to detect at least one or more user gestures. The control unit is configured to control the orientation of the one or more light emitting devices using the one or more actuators and based on the detection of the one or more user gestures by the one or more sensors.

The present disclosure also relates to a vehicle. The vehicle comprises one or more light emitting devices and a lighting system. The one or more light emitting devices are configured to illuminate one or more predefined portions of the vehicle. The lighting system is configured to control the one or more light emitting devices. The lighting system is configured to be disposed in at least one of a central portion on a roof of the vehicle, at least one side portion of the vehicle, in at least one front portion of the vehicle, and in at least one rear portion of the vehicle. The lighting system comprises one or more actuators, one or more sensors, and a control unit. The one or more actuators are configured to move the one or more light emitting devices within one or more predefined portions of the vehicle. The one or more sensors are configured to detect one or more user gestures. The control unit is configured to control orientation of the one or more light emitting devices using the one or more actuators and based on the detection of the one or more user gestures.

The present disclosure also relates to a method for controlling a lighting system of a vehicle is provided. The method comprises a plurality of steps. A first step involves detecting one or more user gestures of at least one user of the vehicle using one or more sensors of the lighting system. A second step involves controlling one or more light emitting devices of the vehicle at one or more predefined portions of the vehicle. A third step involves adjusting an illumination intensity of the one or more light emitting devices based on the one or more user gestures. A fourth step involves controlling one or more actuators to direct the projection of the one or more light emitting devices toward one or more predefined portions of the vehicle.

### BRIEF DESCRIPTION OF THE DRAWINGS

The proposed disclosure is described with reference to an exemplary embodiment of a lighting system of a vehicle and a method for controlling the lighting system. The same reference numerals are used throughout the drawings to reference similar features and components. Description of certain details and implementations follow, including a description below, as well as a discussion of other potential embodiments described below, as well as a discussion of other potential embodiments or implementations of the inventive concepts provided below, followed by a more detailed description with reference to the drawings.
**Figure 1** illustrates a block diagram of a lighting system of a vehicle as per one embodiment of the present disclosure.
**Figure 2** illustrates a block diagram of a lighting system of a vehicle as per another embodiment of the present disclosure.
**Figure 3** illustrates a flow chart of a lighting system of a vehicle as per another embodiment of the present disclosure.
**Figure 4** illustrates a side perspective view of a lighting system as per another embodiment of the present disclosure.
**Figure 5** illustrates a side view of a lighting system as per another embodiment of the present disclosure.
**Figure 6** illustrates a top perspective view of a lighting system of a vehicle as per another embodiment of the present disclosure.
**Figure 7** illustrates a top perspective view of a vehicle as per another embodiment of the present disclosure.
**Figure 8** illustrates a method for controlling a lighting system of a vehicle as per another embodiment of the present disclosure.

### DETAILED DESCRIPTION

While the present disclosure has been shown and described with reference to the following preferred embodiments, it will be apparent to those skilled in the art that changes in form, connection, and detail may be made therein without departing from the scope of the disclosure.

This written description uses examples to provide details on the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

It is to be understood that the aspects of the embodiments are not necessarily limited to the features described herein. Many modifications and variations of the present subject matter are possible in light of the above disclosure.

In the following description, numerous specific details are set forth to provide a thorough understanding of the embodiments. One skilled in the relevant art will recognize, however, that the techniques described herein can be practised without one or more of the specific details, or with other methods, components, materials, etc. In other instances, well-known structures, materials, or operations are not shown or described in detail to avoid obscuring certain aspects.

Various features and embodiments of the present disclosure here will be discernible from the following further description thereof, set out hereunder. Further "front" and "rear", and "left" and "right" referred to in the ensuing description of the illustrated embodiment refer to front and rear, and left and right directions as seen from a rear portion of the vehicle and looking forward. However, it is contemplated that the disclosure in the present disclosure may be applied to any vehicle without defeating the scope of the present subject matter. The detailed explanation of the constitution of parts other than the present disclosure which constitutes an essential part has been omitted at suitable places.

In order to address the one or more of the above-mentioned problems, the present disclosure provides a lighting system of a vehicle. The lighting system comprises one or more light emitting devices, one or more actuators, one or more sensors, and a control unit. The one or more light emitting devices are installed at one or more predefined portions of the vehicle. The one or more actuators are configured to change the orientation of the one or more light emitting devices. The one or more sensors are configured to detect at least one or more user gestures. The control unit is configured to control the orientation of the one or more light emitting devices using the one or more actuators and based on the detection of the one or more user gestures by the one or more sensors.

As per another embodiment of the present disclosure, the one or more sensors comprises at least one of a first sensor, a second sensor, a third sensor, a fourth sensor, and a fifth sensor. The first sensor is configured to detect the one or more user gestures. The second sensor is configured to detect ambient light surrounding the vehicle. The third sensor is configured to detect at least one of an opening and a closing of at least one door of the vehicle. The fourth sensor is configured to detect at least one of an opening and a closing of at least one storage portion of the vehicle. The fifth sensor is configured to detect a presence of an object within a predefined distance of the vehicle.

As per another embodiment of the present disclosure, the at least one first sensor is disposed within at least one front portion of the one or more predefined portions of the vehicle. The at least one front portion is a dashboard region of the vehicle. The control unit is configured to control the one or more actuators to direct the projection of the one or more light emitting devices toward a central configuration relative to the one or more predefined portions within the vehicle based on the inputs from the third sensor. The control unit is also configured to control the one or more actuators to direct the projection of the one or more light emitting devices toward the central configuration relative to the one or more predefined portions within the vehicle based on the inputs from the fourth sensor.

As per another embodiment of the present disclosure, the control unit is configured to control an illumination intensity of the one or more light emitting devices based on inputs from the first sensor and the second sensor. The control unit is also configured to control the one or more actuators to direct a projection of the one or more light emitting devices toward at least one door for a predefined time based on inputs from the third sensor. The control unit is further configured to direct the projection of the one or more light emitting devices toward the at least one storage portion using the one or more actuators based on inputs from the fourth sensor. Additionally, the control unit is configured to actuate the one or more light emitting devices based on inputs from the fifth sensor.

As per another embodiment of the present disclosure, the control unit is configured to direct a projection of the one or more light emitting devices toward at least one door based inputs from the third sensor.

As per another embodiment of the present disclosure, the first sensor comprises a variable sensitivity, the variable sensitivity is adjustable based on one or more user inputs.

As per another embodiment of the present disclosure, the second sensor is integrated with one or more environmental systems of the vehicle.

As per another embodiment of the present disclosure, the one or more predefined portions comprises at least one front portion and at least one rear portion. The control unit is configured to direct a projection of the one or more light emitting devices in any one of the at least one front portion and at least one rear portion using the one or more actuators and based on inputs from at least one first sensor of the one or more sensors.

As per another embodiment of the present disclosure, the at least one front portion comprises a driver seat and at least one passenger seat. The control unit is configured to direct a projection of the one or more light emitting devices toward the driver seat and the at least one user seat.

As per another embodiment of the present disclosure, the one or more user gestures include one or more swipe gestures, bi-directional gestures, one or more rotating gestures, one or more wave gestures or a combination of any of the above.

As per another embodiment of the present disclosure, the one or more sensors and the control unit are integrated with a security system of the vehicle. In another aspect of the disclosure, the security system is configured to raise an alarm upon a detection of at least one of an opening of at least one door of the vehicle and an unauthorised access into the vehicle, wherein the vehicle is in a parked condition.

As per another embodiment of the present disclosure, the control unit is configured to move the one or more light emitting devices in a predefined range, the predefined range being from 0 to 60° measured from a top portion of the vehicle from 20° to 160° measure along a transverse axis. The transverse axis is disposed along a width of the vehicle. The one or more actuators is configured to move the one or more light emitting devices in a multi-degree of freedom.

As per another embodiment of the present disclosure, the lighting system is configured to be customized based on one or more user profiles.

As per another embodiment of the present disclosure, a vehicle is provided. The vehicle comprises one or more light emitting devices and a lighting system. The one or more light emitting devices are configured to illuminate one or more predefined portions of the vehicle. The lighting system is configured to control the one or more light emitting devices. The lighting system is configured to be disposed in at least one of a central portion on a roof of the vehicle, at least one side portion of the vehicle, in at least one front portion of the vehicle, and in at least one rear portion of the vehicle. The lighting system comprises one or more actuators, one or more sensors, and a control unit. The one or more actuators are configured to move the one or more light emitting devices within one or more predefined portions of the vehicle. The one or more sensors are configured to detect one or more user gestures. The control unit is configured to control orientation of the one or more light emitting devices using the one or more actuators and based on the detection of the one or more user gestures.

As per another embodiment of the present disclosure, a method for controlling a lighting system of a vehicle is provided. A first step involves detecting one or more user gestures of at least one user of the vehicle using one or more sensors of the lighting system. A second step involves controlling one or more light emitting devices of the vehicle at one or more predefined portions of the vehicle. A third step involves adjusting an illumination intensity of the one or more light emitting devices based on the one or more user gestures. A fourth step involves controlling one or more actuators to direct the projection of the one or more light emitting devices toward one or more predefined portions within the vehicle.

As per another embodiment of the present disclosure, a fifth step involves maintaining the projection of the one or more light emitting devices toward the at least one door of the vehicle for a predefined time based on the controlling. A sixth step involves adjusting an intensity of the one or more light emitting devices based on detection of ambient light via a second sensor of the one or more sensors. A seventh step involves directing the projection of the one or more light emitting devices toward at least one front portion of the one or more predefined portions, where the at least one front portion is at least one of a driver seat and at least one user seat.

The present subject matter is further described with reference to the accompanying figures. It should be noted that the description and figures merely illustrate the principles of the present subject matter. Various configurations may be devised that, although not explicitly described or shown herein, encompass the principles of the present subject matter. Moreover, all statements herein reciting principles, aspects and examples of the present subject matter, as well as specific examples thereof, are intended to encompass equivalents thereof.

The following disclosure is not intended to limit the present disclosure to the precise forms of particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure.

In the foregoing specification, the disclosure has been described with reference to specific embodiments disclosed herein can be modified or otherwise implemented in various other ways without departing from the scope of the disclosure. Accordingly, this description is to be considered illustrative and is for the purpose of teaching those skilled in the art the manner of making and using various embodiments of the disclosure. It is to be understood that the forms of the disclosure herein shown and described are to be taken as representative embodiments. Equivalent elements, materials processed or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", and "is", used to describe and claim the present disclosure are intended to be construed in a non-exclusive manner, namely allowing for items, components, or elements not explicitly described also to be present. Reference to the singular is also to be construed to relate to the plural.

Further, various embodiments disclosed herein are to be taken in the illustrative and explanatory sense, and would in no way be construed as limiting the present disclosure. All joinder references (e.g., attached, affixed, coupled, connected, etc.) are only used to aid the reader's understanding of the present disclosure, and may not create limitations, particularly as to the position orientation, or use of the system and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "primary", "secondary", "main" or any other ordinary and/or numerical terms, should also be taken as identifiers, to assist the reader's understanding of the various elements, embodiments, variations and/or modifications of the present disclosure, and may not create any limitations, particularly as to the order, or preference, of any element, embodiment, variation, and/or modification relative to, or over, another element, embodiment, variation and/or modification.

It will also be appreciated that one or more of the elements depicted in the drawings/ figures can also be implemented in a more separated or integrated manner, or even removed, or rendered as inoperable in certain cases, as is useful in accordance with a particular application. The embodiments of the present disclosure will now be described in detail with reference to the accompanying drawings. However, the disclosed disclosure is not limited to the present embodiments.

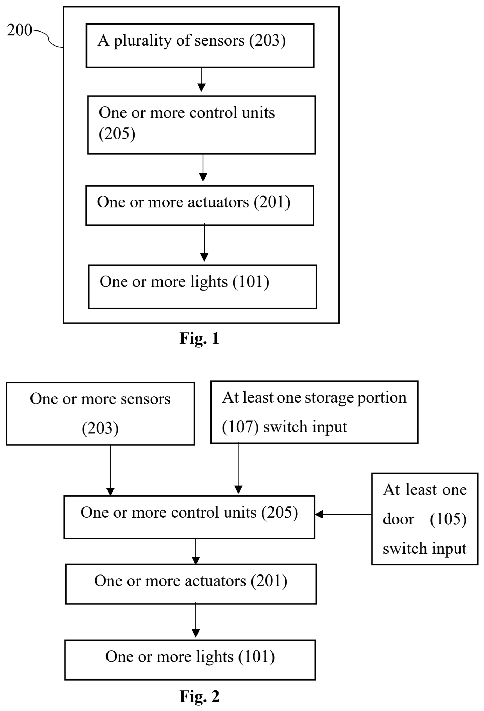

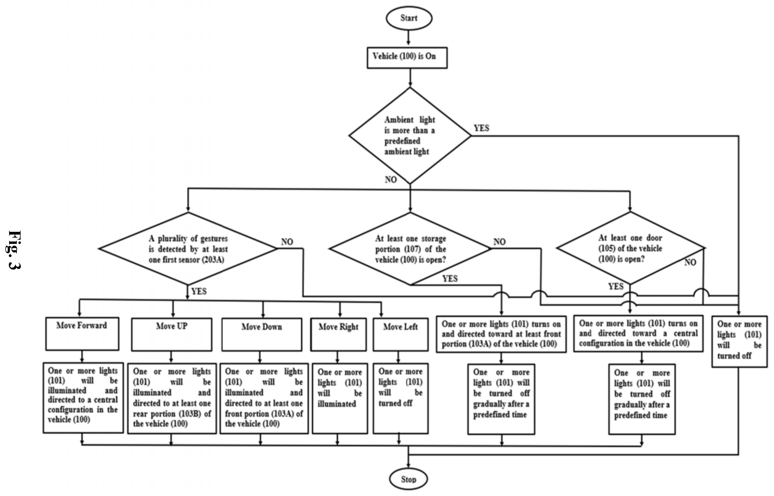

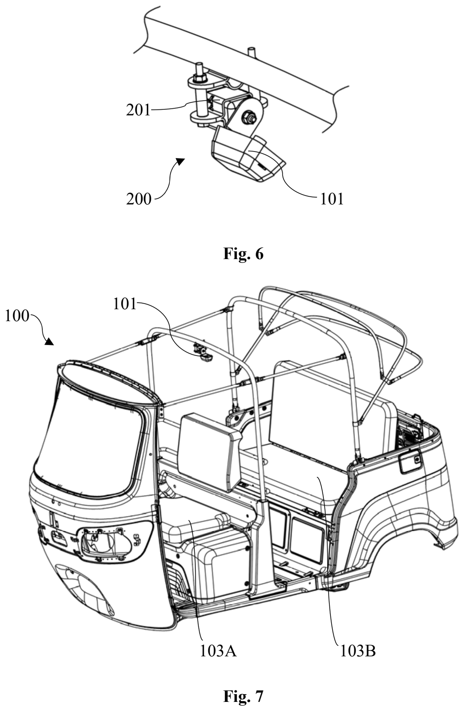

As shown in **Figures 1 - 3****,** a lighting system (200) of a vehicle (100, shown in figure 7) is provided. The lighting system (200) comprises one or more light emitting devices (101), one or more actuators (201), one or more sensors (203), and a control unit (205). The one or more light emitting devices (101) are installed at one or more predefined portions (103A, 103B) of the vehicle (100). The one or more light emitting devices (101) are energy-efficient lighting technologies, such as LED or OLED systems. Upon utilizing said energy-efficient technologies the vehicle (100) is able to reduce the amount of power consumed by the one or more light emitting devices (101), while still providing adequate illumination within the one or more predefined portions (103A, 103B) of the vehicle (100). The one or more actuators (201) change an orientation of the one or more light emitting devices (101) in the vehicle (100). The one or more sensors (203) detect one or more user gestures. The control unit (205) controls the orientation of the one or more light emitting devices (101) using the one or more actuators (201) and based on detection of the one or more user gestures by the one or more sensors (203). It receives inputs from the one or more sensors (203) and switches within the vehicle (100) and processes them to control the one or more light emitting devices (101). Additionally, the control unit (205) sends commands to the motor integrated with the one or more light emitting devices (101) to adjust its direction, ensuring that the light is directed where it's needed inside the vehicle (100). As per an advantage of the present disclosure, the control unit (205) ensures the lighting system (200) is responsive and efficient, providing the appropriate level of illumination based on real-time data.

As per an advantage of the present disclosure, the lighting system (200) not only improves convenience but also supports safe driving by allowing the user/driver to manage the one or more light emitting devices (101) without distraction. This ensures that the user/driver remains focused on the road and enhances the driving experience while maintaining safety and efficiency.

The one or more sensors (203) comprising at least one of a first sensor (203A), a second sensor (203B), a third sensor (203C), a fourth sensor (203D), and a fifth sensor (203E).

The first sensor (203A) detects the one or more user gestures and enables the user to control the lighting system (200) through the one or more user gestures. The one or more user gestures include one or more of swipe gestures such as moving the hand left and right, bi-directional gestures such as moving the hand up and down or forward and backward, one or more rotating gestures or one or more wave gestures such as clockwise and counter clock-wise or a combination of any of the above. In an embodiment of the present disclosure, the first sensor (203A) is mounted in at least one front portion (103A) of the one or more predefined portions (103A, 103B). In one embodiment, the at least one front portion (103A) may be a dashboard region of the vehicle (100). The at least one front portion (103A) is in proximity of the user/driver. This allows the first sensor (203A) to be easily accessed by the user/driver as per the requirements.

Each of the one or more user gestures correspond to a specific function, such as adjusting the direction of the one or more light emitting devices (101) or changing its brightness. The first sensor (203A) also includes proximity detection, which can sense motion of an object, such as a hand which is approaching or moving away. As per an advantage of the present disclosure, this configuration of the first sensor (203A) allows the user to interact with the lighting system (200) without physically touching any switches, improving convenience and reducing distractions for the user.

In an exemplary embodiment, a swipe right in front of the first sensor (203A) turns on the one or more light emitting devices (101) and restores them to their previous state, while a swipe left turns it off. Moving the hand forward shifts the one or more light emitting devices (101) to a central configuration within the one or more predefined portions (103A, 103B) for balanced illumination. Swiping up directs the one or more light emitting devices (101) towards a rear portion (103B) of the one or more predefined portions (103A, 103B), and swiping down moves it to a front portion (103A) of the one or more predefined portions (103A, 103B) for focused lighting. Rotating the hand clockwise increases the intensity of the one or more light emitting devices (101), and counterclockwise rotation decreases it. Additionally, opening at least one door (105, shown in Figure 7) of the vehicle (100) automatically turns on the one or more light emitting devices (101) and centers it within the vehicle (100), while opening at least one storage portion turns the light on and moves it to the front cabin for better visibility. In one embodiment, the at least one storage portion may be a glove box in a dashboard of the vehicle (100).

The one or more light emitting devices (101) can be moved to different positions within the vehicle (100) based on the one or more user gestures. The default position for the one or more light emitting devices (101) is at the center, but it can also be directed to the left or right sides of the one or more predefined portions (103A, 103B) as needed. As per an advantage of the present disclosure, this flexibility allows the one or more light emitting devices (101) to be positioned optimally to illuminate the one or more predefined portions (103A, 103B) of the vehicle (100), ensuring that both the driver and the passengers have appropriate lighting when necessary.

In one embodiment of the present disclosure, the first sensor (203A) is disposed in a dashboard region of the vehicle (100) that minimizes the risk of accidental activation during normal vehicle operations. By disposing the first sensor (203A) in the dashboard region, the lighting system (200) ensures that the one or more light emitting devices (101) will only be controlled when the driver intentionally wants to adjust it. As per an advantage of the present disclosure, the disposing of the first sensor with the dashboard region reduces the likelihood of unintended activations, contributing to a safer driving experience. As the driver is the primary user of the lighting system (200), the first sensor (203A) is disposed so that only deliberate gestures are detected, which further ensures a distraction-free environment.

In another embodiment, the first sensor (203A) comprises a variable sensitivity to detect the one or more user gestures. The variable sensitivity is adjustable based on one or more user inputs. The first sensor (203A) adjusts its sensitivity based on the environment or the specific needs of the user. For example, in bright conditions, the lighting system (200) might increase the sensitivity of gesture recognition, while in darker conditions, it could reduce sensitivity to avoid accidental activations. As per an advantage of the present disclosure, the first sensor (203A) could be especially useful in reducing false positives when the vehicle (100) is in motion, where unintended gestures might accidentally alter the settings of the one or more light emitting devices (101). The users could even have the option to customize the sensitivity level, allowing them to fine-tune the lighting system (200) for their own preferences and driving environment.

The second sensor (203B) continuously detects ambient light within the vehicle (100), which helps in determining whether the one or more light emitting devices (101) should be activated or not. In lower light conditions, such as during night-time or during poor weather conditions when the ambient light is insufficient, the second sensor (203B) triggers the one or more light emitting devices (101) to ensure optimal visibility is maintained within the vehicle (100). The control unit (205) adjusts the illumination levels of the one or more light emitting devices (101) based on inputs from the second sensor (203B), as well as from gestures and manual switch inputs from the user. As per an advantage of the present disclosure, the second sensor (203B) helps optimize power consumption by ensuring the one or more light emitting devices (101) are only used when necessary, avoiding unnecessary energy use during well-lit conditions and contributing to the overall efficiency of electric system of the vehicle (100).

In another embodiment, the second sensor (203B) is integrated with one or more environmental systems of the vehicle (100). In one embodiment the one or more environmental systems may include air conditioning and climate control. The lighting system (200) uses the second sensor (203B) to control the one or more light emitting devices (101) and also to adjust the vehicle's internal environment automatically. In an exemplary embodiment, if the lighting system (200) detects that the lighting is dimming due to sunset or an overcast day, it triggers the climate control to adjust the temperature for increased comfort or activate other vehicle functions like seat heating or cooling to enhance the user experience. As per an advantage of the present disclosure, the integration of the second sensor (203B) with the one or more environmental systems make the vehicle (100) more adaptive to the needs of its occupants, improving both comfort and energy efficiency.

The third sensor (203C) detects at least one of an opening and a closing of at least one door (105) of the vehicle (100). When the lighting system (200) detects that any door of the vehicle is open, the one or more light emitting devices (101) are automatically turned on and directed towards the door side. As per an advantage of the present disclosure, this configuration of the third sensor (203C) is especially useful for providing visibility during vehicle ingress and egress at night. When a person opens the at least one door (105), the position of the one or more light emitting devices (101) helps illuminate the area around the at least one door (105), making it easier and safer for them to enter or exit the vehicle (100). This feature ensures that the users of the vehicle (100) have sufficient lighting around the door without needing to manually adjust the light.

Further, when both the driver's door and the passenger's door are opened simultaneously. The lighting system (200) is configured to keep the one or more light emitting devices (101) in the central configuration. This ensures that there is balanced illumination for both the driver and the passenger, providing better overall visibility for both sides of the vehicle (100). The central configuration improves safety by ensuring that both individuals have adequate lighting when getting in or out of the vehicle (100).

Additionally, the lighting system (200) will only consider the at least one door (105) to be fully closed when it is securely shut, which prevents the one or more light emitting devices (101) from staying on unnecessarily. If the one or more light emitting devices (101) remains on, it serves as an indication that at least one door (105) is still open, alerting the driver or passenger that the vehicle (100) is not fully secured. As per an advantage of the present disclosure, the lighting system (200) helps in reducing the risk of forgetting to close a door, providing an additional layer of security and convenience.

Also, the lighting system (200) responds intelligently to the sequence in which the at least one door (105) is opened, ensuring that the vehicle occupants have adequate lighting without unnecessary interruptions. Specifically, when the first user opens a door, the lighting system (200) detects the action and automatically directs the one or more light emitting devices (101) towards the first opened door. After a predefined period, such as four seconds, if the driver's door is subsequently opened, the lighting system (200) prioritizes the first user's door and keeps the one or more light emitting devices (101) directed in the direction of the first opened door. This predefined time period ensures that the light will stay directed towards the first user for a set duration, allowing them ample time to enter or exit the vehicle. By giving preference to the first opened door, the lighting system (200) ensures that the one or more light emitting devices (101) remains focused where it is most needed, providing continuous illumination to the first occupant while preventing interruptions in the direction of the one or more light emitting devices (101).

The lighting system (200) then ignores any subsequent inputs, such as the driver's door being opened, for the predefined time. This ensures that the driver is not distracted by the one or more light emitting devices (101) constantly shifting away from the first user's position. Once the predefined time expires, the lighting system (200) resets and is ready to respond to new inputs, such as adjusting the direction of the one or more light emitting devices (101) to the driver's side once the first user has completed their ingress or egress.

As per an advantage of the present disclosure, the lighting system (200) creates a smoother and more efficient experience for both the driver and the passenger. It eliminates the need for constant manual adjustments of the one or more light emitting devices (101), improving convenience and minimizing distractions. Furthermore, by keeping the one or more light emitting devices (101) focused on the initial user until their task is complete, the lighting system (200) ensures that both occupants have sufficient lighting when needed, without moving the one or more light emitting devices (101) unpredictably or causing inconvenience.

The fourth sensor (203D) detects at least one of an opening and a closing of at least one storage portion of the vehicle (100). In one embodiment, the at least one storage portion may be a glove box of the vehicle (100). When the glove box is opened, the fourth sensor (203D) detects this action and automatically activates the one or more light emitting devices (101), directing it towards the glove box side. As per an advantage of the present disclosure, the configuration of the fourth sensor (203D) ensures that the driver or passenger has proper illumination when accessing the glove box, making it easier to locate items inside, particularly during the night. The automatic movement of the one or more light emitting devices (101) towards the glove box is a practical solution that reduces the need for manual adjustments, offering a seamless and user-friendly experience. Further, helps in eliminating light unit from the glove box of the vehicle (100).

The fifth sensor (203E) detects a presence of an object within a predefined distance of the vehicle (100). In one embodiment, the fifth sensor (203E) may be disposed on a doorframe of the vehicle (100) and is integrated with the second sensor (203B). The second sensor (203B) continuously detects ambient light within the vehicle (100). Based on this detection of the ambient light, the control unit (205) will determine, if there is a need to turn on the one or more light emitting devices (101) or not. Therefore, when a person is approaching the door or entering the vehicle (100), the fifth sensor (203E) detects this and automatically turn on the one or more light emitting devices (101), even before the at least one door (105) is opened. Simultaneously, the control units (205) based on ambient light inputs from the second sensor (203B) will adjust the illumination intensity of the one or more light emitting devices (101). This would help the users to easily find their way into the vehicle (100), especially in low-light environments, without having to physically interact with any switches or gestures. Additionally, the lighting system (200) automatically adjusts the direction of the one or more light emitting devices (101) based on the position of the user to ensure optimal illumination. Once the user is seated, the lighting system (200) could intelligently adjust the one or more light emitting devices (101) to focus on the areas where it is needed most, such as the dashboard region or center console of the vehicle (100).

The at least one first sensor (203A) is disposed within at least one front portion (103A) of the one or more predefined portions (103A, 103B) of the vehicle (100). The at least one front portion (103A) is a dashboard region of the vehicle (100). The control unit (205) control the one or more actuators (201) to direct the projection of the one or more light emitting devices (101) toward a central configuration relative to the one or more predefined portions (103A, 103B) within the vehicle (100) based on the inputs from the third sensor (203C). The control unit (205) control the one or more actuators (201) to direct the projection of the one or more light emitting devices (101) toward the central configuration relative to the one or more predefined portions (103A, 103B) within the vehicle (100) based on the inputs from the fourth sensor (203D).

The control unit (205) control an illumination intensity of the one or more light emitting devices (101) based on inputs from the first sensor (203A) and the second sensor (203B). The control unit (205) control the one or more actuators (201) to direct a projection of the one or more light emitting devices (101) toward at least one door (105) for a predefined time and based on inputs from the third sensor (203C). The control unit (205) direct the projection of the one or more light emitting devices (101) toward the at least one storage portion using the one or more actuators (201) based on inputs from the third sensor (203C). The control unit (205) actuate the one or more light emitting devices (101) based on inputs from the fifth sensor (205E). The control unit (205) direct a projection of the one or more light emitting devices (101) toward at least one door (105) based inputs from the third sensor (203C).

The one or more sensors (203) and the control unit (205) are integrated with a security system of the vehicle (100) to raise an alarm upon a detection of at least one of an opening of at least one door (105) of the vehicle (100) and an unauthorised access into the vehicle (100), wherein the vehicle (100) is in a parked condition. In one exemplary embodiment, when the lighting system (200) detects that the at least one door (105) has been opened and the one or more light emitting devices (101) are directed toward that area. It simultaneously triggers the security system to ensure that the vehicle (100) is not being tampered with. In the case of the glove box opening, the lighting system (200) may activate anti-theft alarms if it detects unauthorized access. Additionally, if the vehicle (100) is parked in a low-visibility area, the one or more light emitting devices (101) automatically turns on to indicate that the vehicle (100) is pre-occupied, providing an added layer of security.

The lighting system (200) is configured to be customized based on one or more user profiles. The lighting system (200) stores preferences for each individual driver or passenger, such as preferred light intensity, light direction, or even specific gestures that trigger different settings. By integrating these profiles into the vehicle's infotainment system or through a mobile app, users can easily adjust their settings even before entering the vehicle (100). For instance, if a driver has a habit of adjusting the one or more light emitting devices (101) to a lower intensity during nighttime driving. Then the lighting system (200) remembers this preference and automatically adjust the one or more light emitting devices (101) upon detecting the user's presence. This personalization would allow the vehicle (100) to cater to the unique needs of each occupant, improving convenience and user satisfaction.

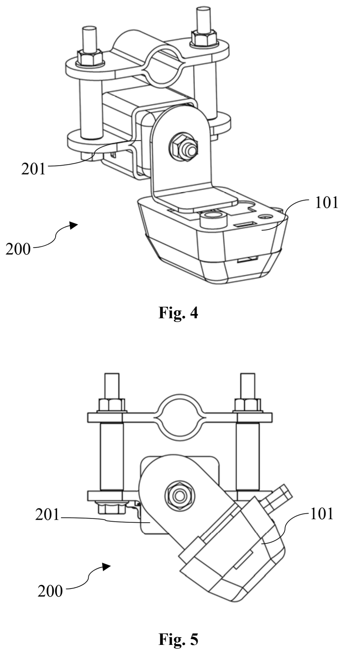

Figures **4 - 6** have been taken together for discussion. In figures 4 - 6, a lighting system (200) is provided. The one or more light emitting devices (101) are mounted centrally on a ceiling of the vehicle (100), allowing for optimal distribution of light within the vehicle (100). The mounting mechanism of the lighting system (200) includes one or more actuators (201) that enables the one or more light emitting devices (101) to move in various directions based on one or more user gestures. This configuration allows the light to shift forward, backward, left, right, and even rotate to adjust its intensity. The advantages of this system include enhanced user control over the lighting environment, improved visibility for both the driver and passengers, and the ability to customize lighting based on specific needs or preferences. Additionally, the automatic adjustment features, such as the light moving to the center when a door is opened, provide convenience and safety by ensuring the cabin is well-lit during entry and exit.

In one embodiment, the one or more light emitting devices (101) are integrated with the one or more actuators (201) through a robust mounting bracket that securely attaches the light fixture to the motorized track system. This mounting bracket allows for smooth and precise movement of the one or more light emitting devices (101) in various directions. In another embodiment, the one or more actuators (201) are a motor that is equipped with a series of gears and pulleys that facilitate the movement of the one or more light emitting devices (101).

To change the direction of projection of the one or more light emitting devices (101), the one or more actuators (201) receives signals from the control unit (205). These signals activate the one or more actuators (201) to move the one or more light emitting devices (100) in the desired direction. For instance, when a swipe gesture is detected, the one or more actuators (201) engages the appropriate gears to move the light left or right. Similarly, rotating gestures prompt the one or more actuators (201) to adjust the intensity of the one or more light emitting devices (101) by rotating the light fixture itself.

As per advantage of the present disclosure, the mechanical setup includes seamless and responsive control over the lighting, enhanced durability due to the secure mounting, and the ability to precisely direct light where it is needed most.

The control unit (205) moves the one or more light emitting devices (101) in a predefined range, the predefined range being from 0 to 60° measured from a top portion of the vehicle (100) and from 20° to 160° measured along a transverse axis disposed along a width of the vehicle (100). The transverse axis acts as a reference for the rotation of the one or more light emitting devices (101). This allows the one or more light emitting devices (101) to cover a large area for illumination. The one or more actuators (201) is configured to move the one or more light emitting devices (101) in a multi-degree of freedom. This angular movement ensures that the one or more light emitting devices (101) are directed efficiently to illuminate both the at least one front portion (103A) and at least one rear portion (103B). Thereby, optimizing the distribution of light within the vehicle (100). By allowing the one or more light emitting devices (101) to move within the predefined range, the lighting system (200) provides focused illumination in the areas that need it most, ensuring both the driver and passengers have adequate lighting based on their positions. As per an advantage of the present disclosure, the predefined range of movement of the one or more light emitting devices (101) enhances the functionality of the light, as it can be directed to specific areas within the vehicle (100) without the need for multiple light fixtures, thus reducing complexity and unnecessary energy consumption.

As shown in **Figure 7**, a vehicle (100) is provided. The vehicle (100) comprises one or more light emitting devices (101), and a lighting system (200). The one or more light emitting devices (101) is configured to illuminate one or more predefined portions (103A, 103B) of the vehicle (100). The lighting system (200) is configured to control the one or more light emitting devices. The lighting system (200) is configured to be disposed in at least one of a central portion on a roof of the vehicle (100), at least one side portion of the vehicle (100), in at least one front portion (103A) of the vehicle (100) and in at least one rear portion (103B) of the vehicle (100). The lighting system (200) comprises one or more actuators (201), one or more sensors (203), and a control unit (205). The one or more actuators (201) to move the one or more light emitting devices (101) within one or more predefined portions (103A, 103B) of the vehicle (100). The one or more sensors (203) are configured to detect a one or more user gestures. The control unit (205) is configured to control the one or more light emitting devices (101) using the one or more actuators (201) and based on detection of the one or more user gestures.

The one or more predefined portions (103A, 103B) comprises at least one front portion (103A) and at least one rear portion (103B). The control unit (205) direct a projection of the one or more light emitting devices (101) in any one of the at least one front portion (103A) and at least one rear portion (103B) using the one or more actuators (201) and based on inputs from at least one first sensor (203A) from the one or more sensors (203).

In one embodiment of the present disclosure, the one or more light emitting devices (101) itself consists of a set of energy-efficient LEDs to provide bright, uniform illumination within the vehicle (100). Also, the one or more actuators (201) are integrated into the one or more light emitting devices (101) to rotate and direct their illumination to one or more predefined portions (103A, 103B) as required. The control unit (205) sends instructions to the one or more actuators (201), adjusting the direction and brightness of the one or more light emitting devices (101) according to input from the one or more sensors (203) and user gestures. As per an advantage of the present disclosure, the configuration of the lighting system (200) allows the one or more light emitting devices (101) to serve both driver and passengers of the vehicle (100) without requiring separate lights, reducing overall weight and complexity of the vehicle (100).

The at least one front portion (103A) comprises a driver seat and at least one passenger seat. The control unit (205) direct a projection of the one or more light emitting devices (101) toward the driver seat and the at least one user seat.

In another embodiment, the one or more light emitting devices (101) are configured to move between seats of a driver and a co-driver. This configuration is useful, where the vehicle (100) has a two-person front cabin setup, where the primary need for lighting is between the drive and the co-driver. When either the driver or the co-driver requires more illumination, the lighting system (200) can direct the cabin light toward their position, making the one or more predefined portions (103A, 103B) more comfortable and functional for both individuals. This ensures that the one or more light emitting devices (101) are always directed where they are needed the most, enhancing usability and providing more efficient illumination while reducing unnecessary power consumption. As per an advantage of the present disclosure, the ability of the lighting system (200) to adjust the direction of the one or more light emitting devices (101) between the driver and co-driver seats adds flexibility to the lighting system (200), making it adaptable to different situations and user preferences, all while maintaining a streamlined and energy-efficient.

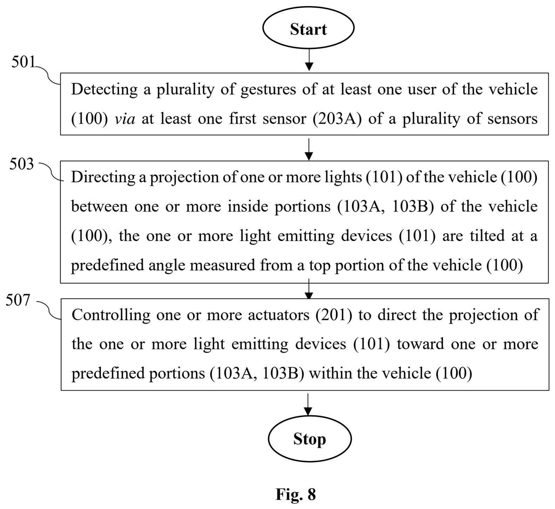

As shown in **Figure 8**, a method (500) for controlling a lighting system (200) of a vehicle (100) is provided. The method (500) comprises a plurality of steps. At step (501) one or more sensors (203) of the lighting system (200) detect one or more user gestures of at least one user of the vehicle (100). At step (503) controls a projection of one or more light emitting devices (101) of the vehicle (100) at one or more predefined portions (103A, 103B) of the vehicle (100). The one or more light emitting devices (101) are moved at a predefined angle measure from a top portion of the vehicle (100) and measure from a transverse axis disposed along a width of the vehicle (100). In one embodiment of the present disclosure, at step (505) the lighting system (200) adjusts an illumination intensity of the one or more light emitting devices (101) based on the one or more user gestures. At step (507) the lighting system (200) controls one or more actuators (201) to direct the projection of the one or more light emitting devices (101) toward one or more predefined portions (103A, 103B) within the vehicle (100).

In another embodiment of the present disclosure, at step (509) the lighting system (200) maintains the projection of the one or more light emitting devices (101) toward at least one door (105) of the vehicle (100) for a predefined time based on the step (507). At step (511) the lighting system (200) adjusts an intensity of the one or more light emitting devices (101) based on detection of ambient light *via a* second sensor (203B) of the one or more sensors (203). At step (513) the lighting system (200) directs the projection of the one or more light emitting devices (101) toward at least one front portion (103A) of the one or more predefined portions (103A, 103B), and the at least one front portion (103A) is at least one of a driver seat and at least one user seat i.e. co-driver's seat.

According to the above disclosure, the present disclosure provides various advantages. In a preferred embodiment, the lighting system (200) improves user convenience, ensures that the driver remains focused and enhances the driving experience while maintaining safety and efficiency.

The second sensor (203B) optimizes power consumption, avoids unnecessary energy, and contributes to the overall efficiency of electric system of the vehicle (100).

The third sensor (203C) makes it easier and safer to enter or exit the vehicle (100) and ensures that there is a sufficient lighting around the at least one door (105) without needing to manually adjust the intensity of light.

The central configuration of the one or more light emitting devise (101) improves safety for the user when they are getting in or out of the vehicle (100).

The lighting system (200) reduces the risk of involuntary to opening and closing of the at least one door (105).

The fourth sensor (203D) ensures that the driver or passenger has proper illumination when accessing the glove box and reduces the need for manual adjustments, offering a seamless and user-friendly experience.

The fifth sensor (203E) help the users to easily find their way into the vehicle (100).

The lighting system (200) eliminates the need for constant manual adjustments of the one or more light emitting devices (101), improves the convenience and minimise the distractions.

The lighting system (200) ensures sufficient lighting without moving the one or more light emitting devices (101) unpredictably or causing inconvenience.

The control unit (205) ensures the lighting system (200) is responsive and efficient, providing the appropriate level of illumination based on real-time data.

The configuration of the lighting system (200) serves both the driver and passengers of the vehicle (100) without requiring separate lights, reducing the overall weight and complexity.

The first sensor (203A) improves convenience and reduces distractions for the user.

The first sensor (203A) reduces false positives when the vehicle (100) is in motion and allows the users to customize the sensitivity level, allowing them to fine-tune the lighting system (200) for their own preferences and driving environment.

The one or more light emitting devices (101) are positioned optimally to illuminate and ensuring that both the driver and the passengers have appropriate lighting when necessary.

The configuration of the first sensor (203A) within the dashboard region of the vehicle (100) contributes to a safer driving experience and ensures a distraction-free environment.

The integration of the second sensor (203B) with the one or more environmental systems is more adaptive to the needs of its occupants.

The predefined range of movement of the one or more light emitting devices (101) enhances the functionality of the light, reduces its complexity and unnecessary energy consumption.

The lighting system (200) adjust the direction of the one or more light emitting devices (101) making it adaptable to different situations and user preferences.

The mechanical setup of the lighting system (200) is seamless and responsive to the secure mounting, and precisely direct light where it is needed most.

While the present disclosure has been shown and described with reference to the foregoing preferred embodiments, it will be apparent to those skilled in the art that changes in form, connection, and detail may be made therein without departing from the scope of the disclosure.

This written description uses examples to provide details on the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

It is to be understood that the aspects of the embodiments are not necessarily limited to the features described herein. Many modifications and variations of the present subject matter are possible in light of the above disclosure.

### LIST OF REFERENCES

| **Reference Numeral** | **Meaning** |
|---|---|
| **200** | A lighting system |
| **201** | one or more actuators |
| **203** | a plurality of sensors |
| **203A** | a first sensor |
| **203B** | a second sensor |
| **203C** | a third sensor |
| **203D** | a fourth sensor |
| **203E** | a fifth sensor |
| **205** | a control unit |
| **100** | a vehicle |
| **101** | one or more light emitting devices |
| **103A, 103B** | one or more predefined portions |
| **103A** | at least one front portion |
| **103B** | at least one second portion |
| **105** | at least one door |
| **500** | A method for controlling a lighting system of a vehicle |
| **501** | A first step of the method for controlling a lighting system of a vehicle |
| **503** | A second step of the method for controlling a lighting system of a vehicle |
| **505** | A third step of the method for controlling a lighting system of a vehicle |
| **507** | A fourth step of the method for controlling a lighting system of a vehicle |
| **509** | A fifth step of the method for controlling a lighting system of a vehicle |
| **511** | A sixth step of the method for controlling a lighting system of a vehicle |
| **513** | A seventh step of the method for controlling a lighting system of a vehicle |

## Claims

1. A lighting system (200) of a vehicle (100), the lighting system (200) comprising:
one or more light emitting devices (101), the one or more light emitting devices (101) being installed at one or more predefined portions (103A, 103B) of the vehicle (100);
one or more actuators (201), the one or more actuators (201) being configured to change an orientation of the one or more light emitting devices (101);
one or more sensors (203), the one or more sensors (203) being configured to detect at least one or more user gestures; and
a control unit (205), the control unit (205) being configured to control the orientation of the one or more light emitting devices (101) using the one or more actuators (201) and based on detection of the one or more user gestures by the one or more sensors (203).

2. The lighting system (200) as claimed in claim 1, wherein the one or more sensors (203) comprising at least one of:
a first sensor (203A), the first sensor (203A) being configured to detect the one or more user gestures;
a second sensor (203B), the second sensor (203B) being configured to detect ambient light surrounding the vehicle (100);
a third sensor (203C), the third sensor (203C) being configured to detect at least one of an opening and a closing of at least one door (105) of the vehicle (100);
a fourth sensor (203D), the fourth sensor (203D) being configured to detect at least one of an opening and a closing of at least one storage portion of the vehicle (100); and
a fifth sensor (203E), the fifth sensor (203E) being configured to detect a presence of an object within a predefined distance of the vehicle (100).

3. The lighting system (200) as claimed in claim 2, wherein the at least one first sensor (203A) being disposed within at least one front portion (103A) of the one or more predefined portions (103A, 103B) of the vehicle (100), and
the control unit (205) being configured to control the one or more actuators (201) to:
direct the projection of the one or more light emitting devices (101) toward a central configuration relative to the one or more predefined portions (103A, 103B) within the vehicle (100) based on the inputs from the third sensor (203C); and
direct the projection of the one or more light emitting devices (101) toward the at least one storage portion relative to the one or more predefined portions (103A, 103B) within the vehicle (100) based on the inputs from the fourth sensor (203D).

4. The lighting system (200) as claimed in claim 2, wherein the control unit (205) being configured to
control an illumination intensity of the one or more light emitting devices (101) based on inputs from the first sensor (203A) or the second sensor (203B); and
control the one or more actuators (201) to:
direct a projection of the one or more light emitting devices (101) toward at least one door (105) for a predefined time and based on inputs from the third sensor (203C),
direct the projection of the one or more light emitting devices (101) toward the at least one storage portion using the one or more actuators (201) based on inputs from the fourth sensor (203D), and
actuate the one or more light emitting devices (101) based on inputs from the fifth sensor (205E).

5. The lighting system (200) as claimed in claim 2, wherein the control unit (205) being configured to direct a projection of the one or more light emitting devices (101) toward at least one door (105) based on inputs from the third sensor (203C).

6. The lighting system (200) as claimed in claim 1, wherein the one or more predefined portions (103A, 103B) comprising at least one front portion (103A) and at least one rear portion (103B), and
the control unit (205) being configured to direct a projection of the one or more light emitting devices (101) in any one of the at least one front portion (103A) and at least one rear portion (103B) using the one or more actuators (201) and based on inputs from at least one sensor of the one or more sensors (203).

7. The lighting system (200) as claimed in claim 6, wherein the at least one front portion (103A) comprises a driver seat and at least one passenger seat, and
the control unit (205) being configured to direct a projection of the one or more light emitting devices (101) toward the driver seat and the at least one user seat.

8. The lighting system (200) as claimed in claim 1, wherein the one or more user gestures include one or more of swipe gestures, bi-directional gestures, one or more rotating gestures, one or more wave gestures or a combination of any of the above.

9. The lighting system (200) as claimed in claim 1, wherein the one or more sensors (203) and the control unit (205) being integrated with a security system of the vehicle (100).

10. The lighting system (200) as claimed in claim 1, wherein the control unit (205) being configured to move the one or more light emitting devices (101) in a predefined range, the predefined range being measured from a top portion of the vehicle (100) and from 20° to 160° measured along a transverse axis, the transverse axis being disposed along a width of the vehicle (100), and
the one or more actuators (201) being configured to move the one or more light emitting devices (101) in a multi-degree of freedom.

11. A vehicle (100), the vehicle (100) comprising:
one or more light emitting devices (101), the one or more light emitting devices (101) being configured to illuminate one or more predefined portions (103A, 103B) of the vehicle (100); and
a lighting system (200), the lighting system (200) being configured to control the one or more light emitting devices (101), and the lighting system (200) being configured to be disposed in at least one of a central portion on a roof of the vehicle (100), at least one side portion of the vehicle (100), in at least one front portion (103A) of the vehicle (100) and in at least one rear portion (103B) of the vehicle (100), and the lighting system (200) comprising:
one or more actuators (201), the one or more actuators (201) being configured to move the one or more light emitting devices (101) within one or more predefined portions (103A, 103B) of the vehicle (100);
one or more sensors (203), the one or more sensors (203) being configured to detect a one or more user gestures; and
a control unit (205), the control unit (205) being configured to control orientation of the one or more light emitting devices (101) using the one or more actuators (201) and based on detection of the one or more user gestures.

12. A method (500) for controlling a lighting system (200) of a vehicle (100), the method comprises steps:
detecting (501), a one or more user gestures of at least one user of the vehicle (100) using one or more sensors (203) of the lighting system (200);
controlling (503), one or more light emitting devices (101) of the vehicle (100) at one or more predefined portions (103A, 103B) of the vehicle (100); and
controlling (507), one or more actuators (201) to direct the projection of the one or more light emitting devices (101) toward one or more predefined portions (103A, 103B) within the vehicle (100).

13. The method (500) as claimed in claim 12, wherein the method (500) comprises steps:
maintaining (509), the projection of the one or more light emitting devices (101) toward at least one door (105) of the vehicle (100) for a predefined time based on the controlling (507); and
adjusting (511), an intensity of the one or more light emitting devices (101) based on detection of ambient light *via* a second sensor (203B) of the one or more sensors (203).
directing (513), the projection of the one or more light emitting devices (101) toward at least one front portion (103A) of the one or more predefined portions (103A, 103B), and
the at least one front portion (103A) is at least one of a driver seat and at least one user seat.
